# EUROPEAN PATENT SPECIFICATION

(11) **EP 1 790 149 B1**
(45) Date of publication and mention of the grant of the patent: **27.01.2010**
(21) Application number: 05775967.2
(22) Date of filing: 22.08.2005
(51) Int. Cl.: H04L 29/08

(54) **METHOD AND SESSION INITIATION PROTOCOL (SIP) SERVER FOR THE EXCHANGE OF END-POINT CAPABILITIES**
VERFAHREN UND SERVER DES SITZUNGSEINLEITUNGSPROTOKOLLS (SIP) ZUM AUSTAUSCH VON ENDPUNKTFÄHIGKEITEN
PROCEDE ET SERVEUR DE PROTOCOLE D'INITIATION DE SESSION (SIP) POUR ECHANGER DES CAPACITES DES TERMINAUX D'EXTREMITE

(30) Priority: 31.08.2004 US 929402
(43) Date of publication of application: 30.05.2007
(73) Proprietor: Telefonaktiebolaget LM Ericsson (publ), 164 83 Stockholm (SE)
(72) Inventor: POSTMUS, Peter, Pierrefonds, Québec H9H 2B7 (CA)
(74) Representative: von Zmuda-Trzebiatowski, Margarethe
(86) International application number: PCT/IB2005/052754
(87) International publication number: WO 2006/024987

(56) References cited:
- WO-A-01/46822
- WO-A-03/102806
- PAILER R ET AL: "USING PARLAY APIS OVER A SIP SYSTEM IN A DISTRIBUTED SERVICE PLATFORM FOR CARRIER GRADE MULTIMEDIA SERVICES" WIRELESS NETWORKS, ACM, US, vol. 9, no. 4, July 2003 (2003-07), pages 353-363, XP001186990 ISSN: 1022-0038
- FTW K PETERBAUER (KAPSCH AG) J STADLER ET AL: "SIP Servlet API Extensions" IETF STANDARD-WORKING-DRAFT, INTERNET ENGINEERING TASK FORCE, IETF, CH, 14 February 2001 (2001-02-14), XP015033886 ISSN: 0000-0004

## Description

BACKGROUND OF THE INVENTION

Field of the Invention

The present invention relates to a method and system for exchanging end-point capabilities information using the Session Initiation Protocol (SIP).

Description of the Related Art

The Session Initiation Protocol (SIP) is an Internet Engineering Task Force (IETF) standardprotocolthat allows for the establishment of interactiveuser sessionsinvolving-multimediaelements such as video, voice, chat, gaming, and virtual reality. Like theHyper Text Transfer Protocol (HTTP)or theSimple Mail Transfer Protocol (SMTP), SIP works in the application layerof the Open Systems Interconnection (OSI) communications model and can establish multimedia sessions or Internet telephony calls, and modify, or terminate them. The protocol can also invite participants tounicastormulticastsessions that do not necessarily involve the initiator. Because SIP supports name mapping andredirectionservices, it makes possible for users to initiate and receive communications and services from any location, and for networks to identify the users wherever they are.

SIP is a request-response protocol, dealing with requests from clients and responses from servers. Participants are typically identified by SIP Uniform Resource Identifiers (URIs). Requests can be sent through any transport protocol, such as theUser Datagram Protocol (UDP), theSimple Control Transport Protocol (SCTP), or Transfer Control Protocol (TCP). SIP determines the end system to be used for the session, the communication media and media parameters, and the called party's desire to engage in the communication. Once these are assured, SIP establishes call parameters at either end of the communication, and handles call transfer and termination. SIP is specified in IETF's Request for Comments [RFC] 3261, which is herein included by reference.

SIP services are typically implemented via SIP application servers.A SIP application server is aserverof the SIP-baseddistributednetworkthat provides business logic for one or more application programs that enable the provision of SIP services. Examples of SIP services that may be provided to SIP users are: SIP conferencing service, SIP presence service,Push-To-Talk, SIP Session Forwarding, and Messaging Server.

Telecommunications equipment vendors developed SIP servers that are currently reaching the market, as SIP services begin to be commercially exploited. For example, Telefonaktiebolaget LM Ericsson Inc (hereinafter called Ericsson), a telecommunications manufacturer, developed a SIP application server including a SIP Servlet Application Programming Interface (API), called SSA,based onJAVA™ programming running on top of a PC server. The SSA offers an API that service developers can use to easily develop new SIP services, also called SIP applications. SSA is based on the Hyper Text Transfer Protocol (HTTP) servlet mechanism. The methods available in SSA are implemented in a SIP engine, also called the SIP container. The main target of SSA is to offer an abstraction from the SIP protocol. Ericsson included the SIP container in the Ericsson's Application Server (E-AS) as well as in Ericsson's Service Development Studio (SDS) package.Such an Application Server is a 3GPP defined SIP Application Server, which is a central node in the IP Multimedia System (IPMM) architecture for enabling SIP-based applications. It combines a SIP container implementing the SSA methods and a full computer server. Ericsson Service Development Studio is a Design and an Execution Environment where SIP applications for the Ericsson Application Server can be designed, deployed, executed and tested.

IETF also defined so-called SIP option tags in RFC 3261, which is also herein included by reference. These option tags indicate capabilities of the end-points (e.g. User Equipment (UE), application servers, etc) of a SIP session. The RFC 3261 describes a mechanism in which, during a SIP session, end-points can request from other end-points and proxy-servers the capabilities they support. The following SIP message headers are used for exchanging option tag information:

Require', 'Supported', 'Proxy-Require', and 'Unsupported'. A SIP option tag is a string that is associated with a particular SIP option (i.e., an extension), and identifies the option to SIP endpoints.

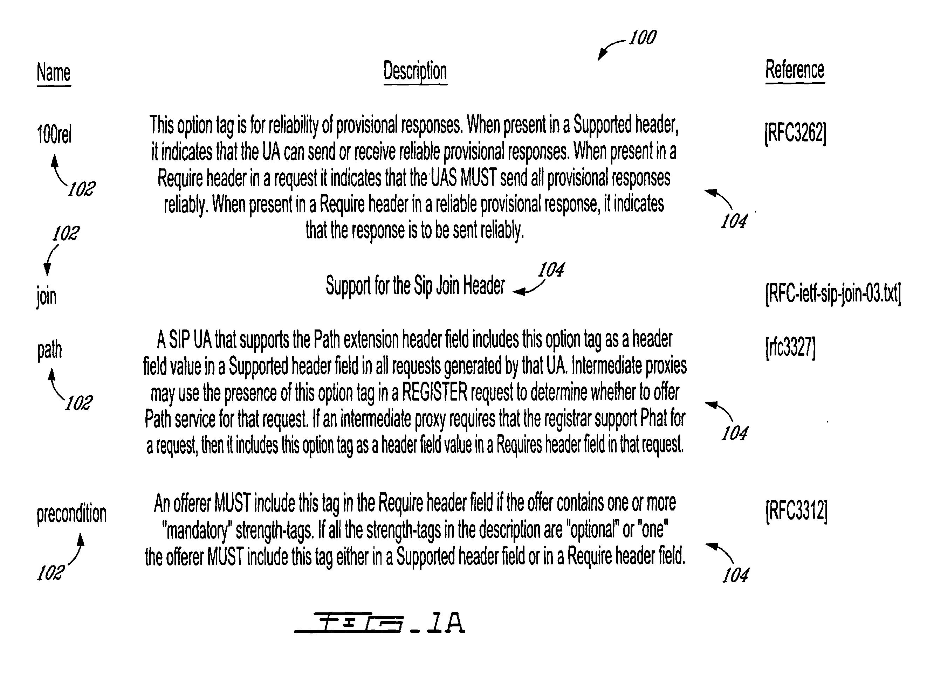

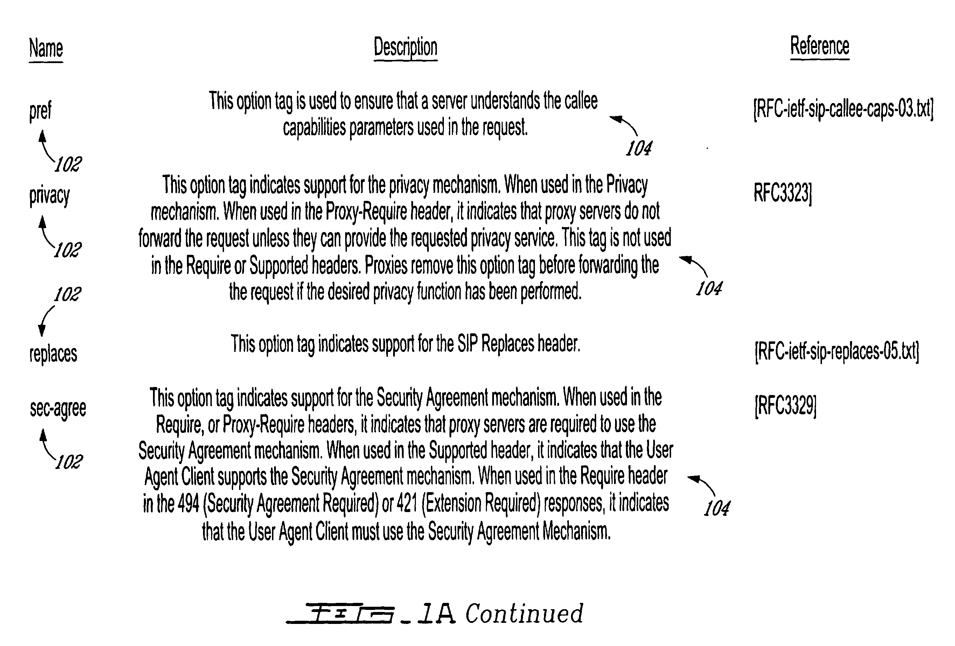

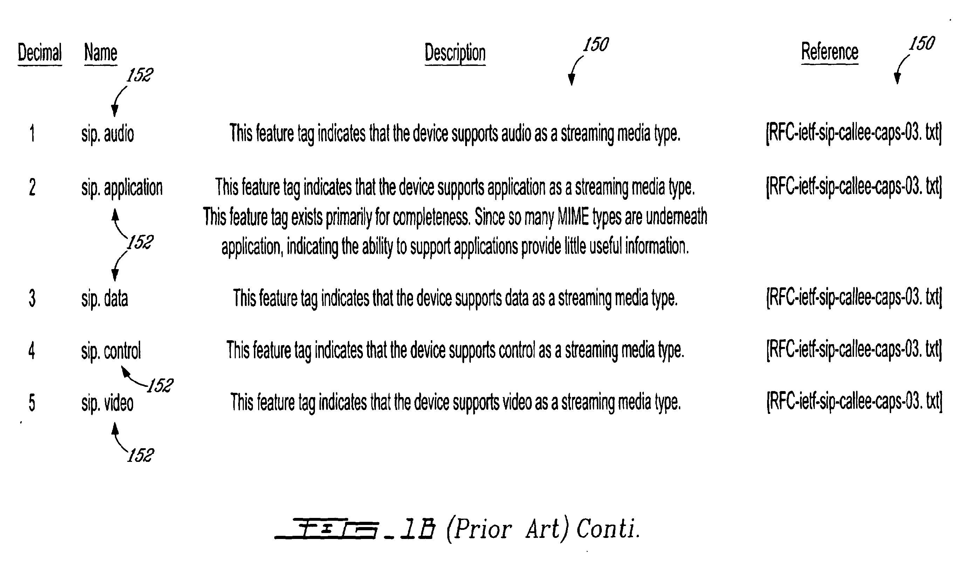

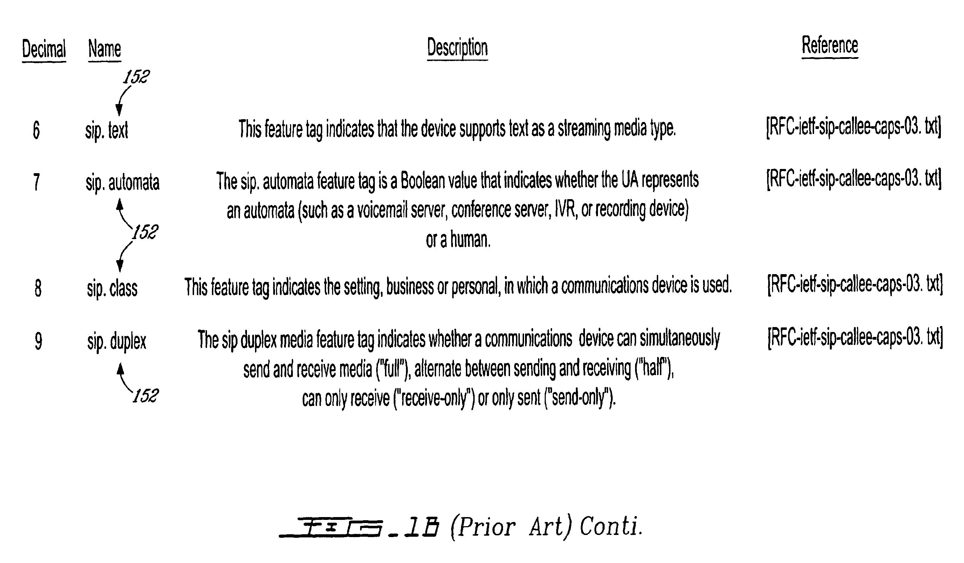

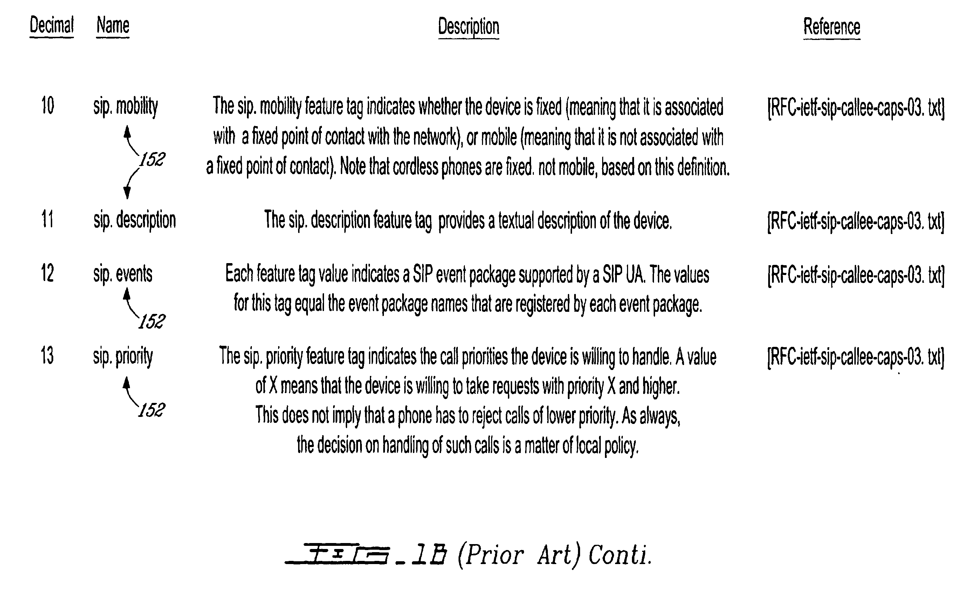

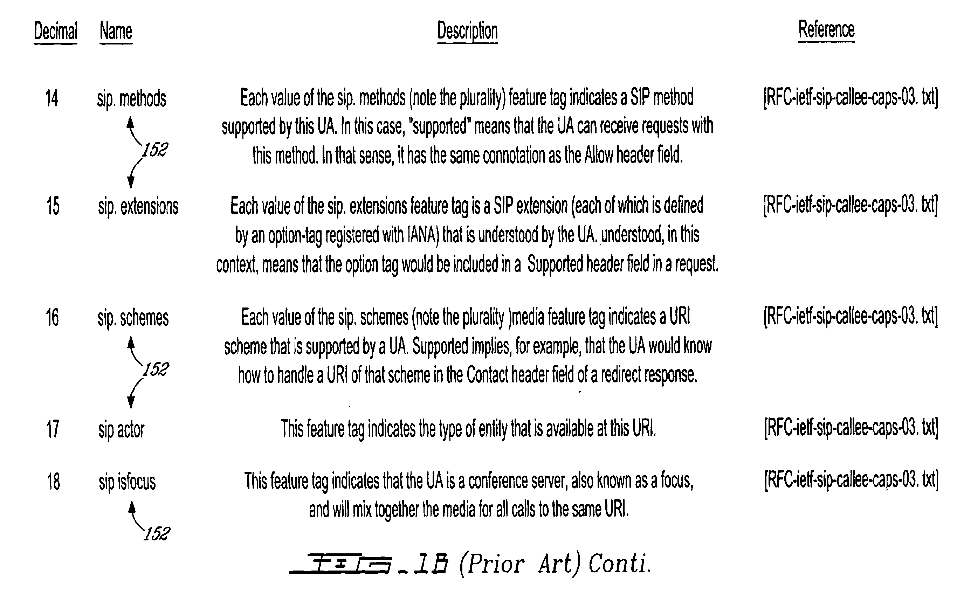

Reference is now made to Figure 1.a (Prior Art) that shows a list 100 of various SIP option tags 102, along with their short descriptions 104. Each such option tag may be included in a header of a SIP message, such as for example in the headers:'

Require', 'Supported', 'Proxy-Require', and 'Unsupported', alone or along with one or more other option tags. For example, a SIP end-point may include in a supported header of a SIP message the following option tag:

Option_tag value = 'privacy'

which indicates to the SIP end-point that the sender supports the privacy mechanism capability.. The list 100 provides a description of all IETFs currently defined SIP option tags.

In current SIP implementations, a service running on a given SIP application server can act as an end-point and respond to a SIP request that it receives, or can initiate a SIP request by itself. In these SIP messages where a SIP service acts as a SIP end-point, the service must add SIP option tag headers to indicate its capabilities, such as for example its required or supported capabilities.

However, SIP services are developed by various application developers with different degrees of knowledge and programming experience. Due to this discrepancy in the developers' skills, it was noticed that not all new SIP services are developed with the ability of managing SIP option tags appropriately, and that some SIP services do not support SIP option tags at all. It is easy for a service developer to forget to include this functionality when programming a new SIP service.

It would therefore be advantageous to automate the selective and proper inclusion of SIP option tags in SIP message headers in order to offer a higher level of abstraction to the service developer when programming a new SIP service.

On the other hand, besides the option tags defined in IETF'sRFC3261, the IETF is also currently defining another type of end-point capability through the so-called SIP feature tags related to SIP caller/callee preferences and capabilities. Caller preferences are used, for example, to route a SIP request to the proper terminal of a given recipient (in SIP a terminal is called User Equipment, i.e. UE), among possibly a plurality of terminals of the recipient, which supports capabilities indicated in the specific SIP message headers related to the feature tags of a particular SIP request.

Callee preferences are used to advertise what capabilities are supported by a given UE or required from a given UE to establish a SIP communication. The UE advertises its own capabilities through the use of the SIP feature tags included in the SIP message's 'Contact' header employed during the SIP registration process. A SIP 'Contact' header with feature tags is thus included in the SIP REGISTER message that is sent to a server. A given UE can also find out the feature tags supported by another UE by sending a SIP OPTIONS request to the SIP server. It may include a SIP 'Contact' header with its own feature tags as well, so that each UE involved in a SIP session learn about the other session participant's supported, or required, features. For example, when a caller requests a new SIP session to be established with a calee identified by a URI and having a plurality of UE terminals, feature tags included in the SIP request insure that the SIP session is established with the UE that best correspond to the tags required by the caller. In general, caller preferences describe how a SIP request can be best routed to a UE that supports certain feature tags.

A similar problem as the one described hereinbefore with respect to the existing implementations for SIP option tags also exists for the use of SIP feature tags. For example, a SIP service running on a SIP application server can act as an end-point and respond to a SIP request that it receives. In these responses, the SIP service must add feature tag headers to indicate its hardware and/or software capabilities. However, the current version of SSA does not allow a SIP service to modify the SIP'Contact' header of a SIP message. In SSA, the 'Contact' header is a system header, which means it cannot be modified by a SIP service. However, in current implementations, there is no defined means for a SIP engine or container to modify feature tag headers. In order to cope with this limitation, some application programmers have altered the SIP engine or container to allow for a modification of the SIP "Contact" message header by the SIP services. However, this is against the path taken by the JAVA community for defining the rules for SSA.

Reference is now made to Figure 1.b (Prior Art) that shows a preliminary list 150 of various SIP feature tags 152, along with their short descriptions 154. Each such feature tag may be included in a "Contact" header of a SIP message. For example, a SIP end-point may include in a "Contact" header of a SIP message the following feature tag:

### Feature tag value = "sip.audio"

which indicates to the receiving SIP end-point that the sender's device supports audio as a streaming media. It is also possible for other types of feature tags, such as for example proprietary feature tags, to be also included in a SIP message header.

Although there is no prior art solution as the one proposed hereinafter for solving the above-mentioned deficiencies, the international Patent Application Publication number WO 01/46822 bears some relation with the present invention. In this publication, there is taught an API for SIP servlets. This API sets forth critical functionality required for servlets in order to handle messages that comply with SIP. The servlets implement telephone service logic, such as call forwarding, call screening and mobility service and may be resident on a SIP proxy server. A servlet manager is also resident on the SIP server and is responsible for receiving messages and determining which of the service should process the incoming messages. In this publication, the service manager is solely responsible for distributing incoming SIP messages to the proper SIP servlet and therefore, nothing in this publication suggest any kind of option or feature tags management.

In addition document XP-001186990 is referenced describing a mapping of SIP functionality to Parlay Services.

It would therefore be advantageous to automate the selective inclusion of the appropriate SIP feature tags and option tags in SIP messages such as in SIP requests and responses, in order to offer a higher level of abstraction to the service developer when programming a new SIP service.

Accordingly, it should be readily appreciated that in order to overcome the deficiencies and shortcomings of the existing solutions, it would be advantageous to have a method and extended SIP engine/container for selectively adding SIP end-point capabilities such as for example option tags and feature tags information to SIP requests and SIP responses messages.

The present invention provides such a method and system.

### Summary of the Invention

In one aspect, the present invention is a method for creating a Session initiation Protocol (SIP) message, the method comprising the steps of:
a. sending a SIP message from a SIP service running on a SIP application server to a SIP engine of the server;
b. including by the SIP engine in the SIP message information relative to end-point capabilities; and
c. sending the SIP message including the information relative to end-point capabilities from the SIP application server, the method further comprising, prior to step a., the steps of:
d.installing the SIP service on the SIP application server; and
e. analysing by the SIP engine the SIP service and acquiring knowledge about the information relative to end-point capabilities of the SIP service.

In another aspect, the present invention is a Session Initiation Protocol (SIP) application server comprising:
a SIP engine supporting SIP communications;
a SIP service running on the SIP server;
wherein a SIP message is sent from the SIP service to the SIP engine, which includes in the SIP message information relative to end-point capabilities and further sends the SIP message including the information relative to end-point capabilities from the SIP application server, wherein the SIP service is installed in the SIP application server, and the SIP engine analyses the SIP service for acquiring knowledge about the information relative to end-point capabilities of the SIP service.

### Brief Description of the Drawings

For a more detailed understanding of the invention, for further objects and advantages thereof, reference can now be made to the following description, taken in conjunction with the accompanying drawings, in which:
Figure 1.a (Prior Art) shows a list of various SIP option tags that may be included in SIP message headers;
Figure 1.b (Prior Art) shows a list of various SIP feature tags that may be included in SIP message headers;
Figure 2 is an exemplary high-level block diagram of a SIP application server according to the preferred embodiment of the present invention;
Figure 3.a is an exemplary representation of a SIP REGISTER request comprising a SIP feature tag included in a "Contact" header according to the preferred embodiment of the present invention;

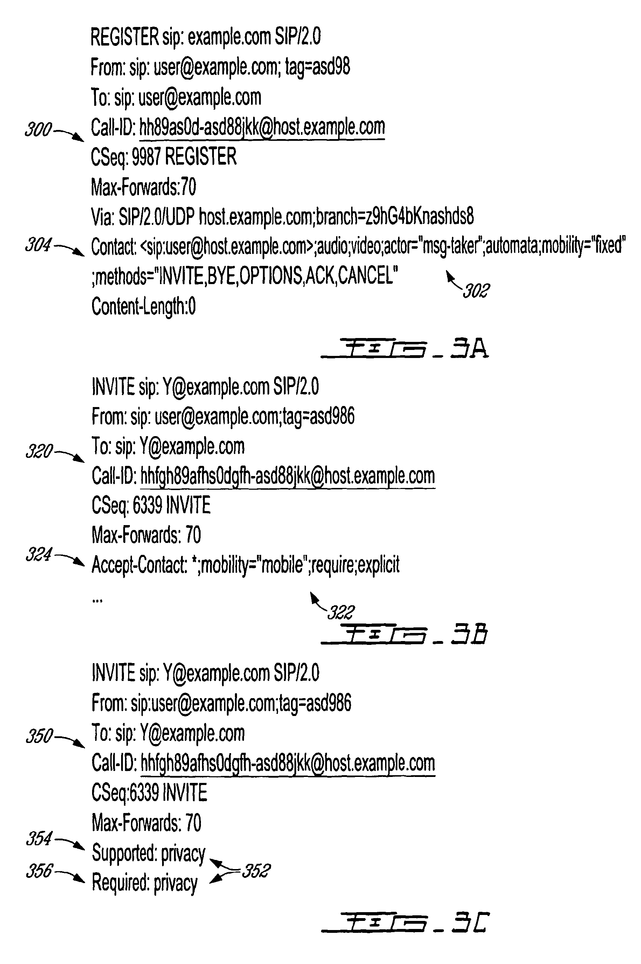

Figure 3.b is another exemplary representation of a SIP INVITE request comprising a SIP feature tag included in a "Contact" header according to the preferred embodiment of the present invention;
Figure 3.c is an exemplary representation of a SIP INVITE request comprising a SIP option tag included in "Supported" header as well as in a "Required" header according to the preferred embodiment of the present invention; and

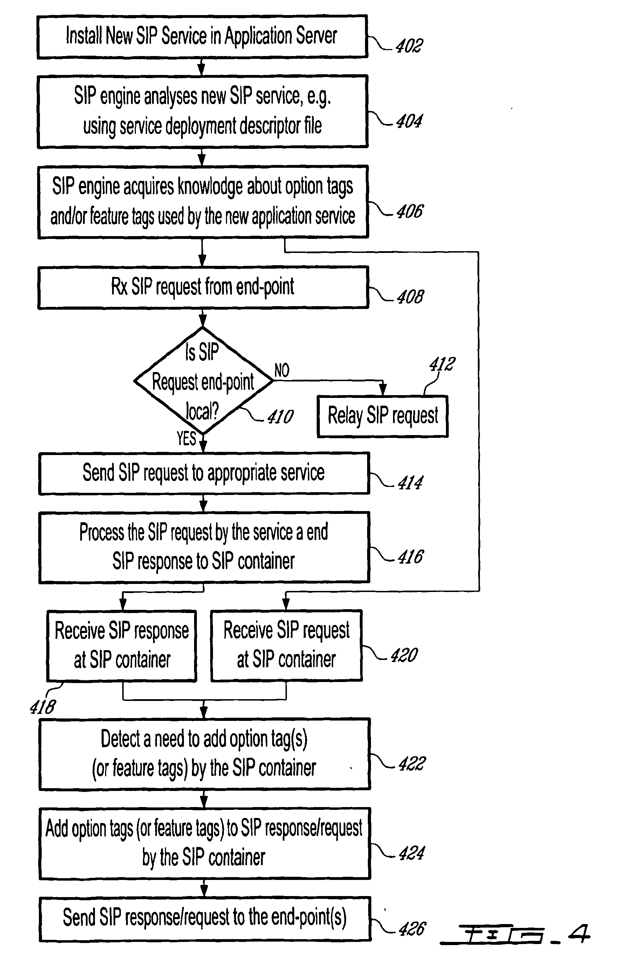

Figure 4 is an exemplary flowchart diagram of a method according to the preferred embodiment of the present invention.

### Detailed Description of the Preferred Embodiments

The innovative teachings of the present invention will be described with particular reference to various exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views.

According to the preferred embodiment of the present invention, the functionality of a Session Initiation Protocol (SIP) engine included in a SIP application server, also called herein a SIP container, is extended with service logic that automatically interprets SIP end-point capabilities, such as for example the SIP option tags and feature tags, and in turn automatically adds the correct end-point capabilities information in the appropriate SIP message headers of the requests/responses send out from the server. The SIP engine of a SIP application server detects the option or feature tags the invoked SIP service supports using a deployment descriptor file associated to the SIP service. At deployment of a new SIP service on a SIP application server, the SIP container analyses the deployment descriptor file of the given service. For support of option tags, as well as for the support of feature tags, a new optional tag is introduced in the deployment descriptor file. The name for these tags could be, for example:

<supported option tag> <value> </supported option tag> for option tags

and

<supported feature tag> <value> </supported feature tag> for feature tags

The value in this tag indicates the option tag, or respectively the feature tag supported by the SIP service. The same tag may appear multiple times if multiple option tags (or feature tags) are supported by the service. The SIP container then knows which option or feature tags are supported by the given SIP service. If no tag of a given type (e.g. no option tag) exists in the deployment descriptor of a given SIP service, it is assumed that there is no support in the SIP service for any option tags. At reception of a SIP request, the SIP container invokes the SIP service without applying any logic regarding the option or feature tags. When the SIP service sends a request or response, the SIP container adds the correct headers and values to the request/response. For the inclusion of option tags in a SIP message, the SIP container can add or change any of the following headers if required:

Supported

Unsupported

Required

Proxy-Required

For the inclusion of feature tags in a SIP message, the SIP container can add or change the Contact header if required.

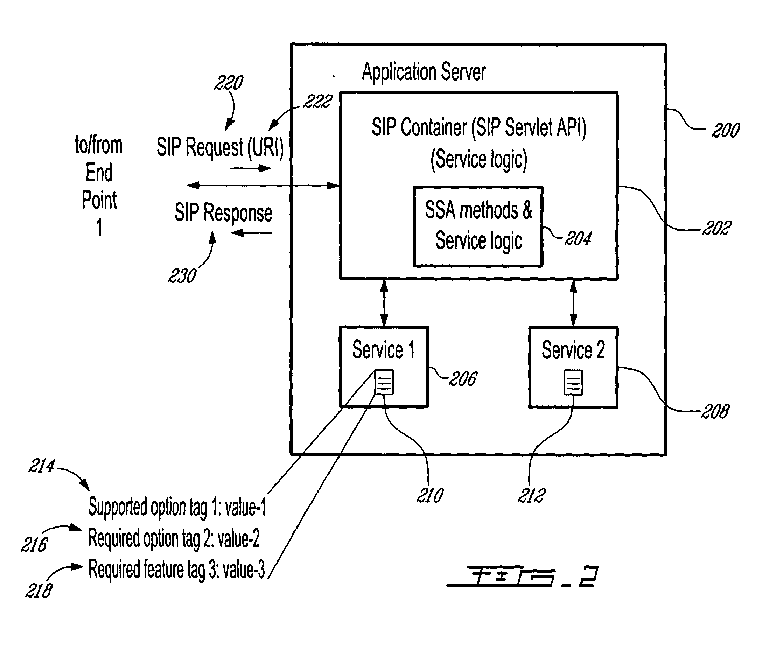

Reference is now made to Figure 2, which is an exemplary high-level block diagram of a SIP application server 200 according to the preferred embodiment of the present invention. Shown in Figure 2 is first a SIP application server 200, which may comprise a computer system running an Operating System (OS), the server 200 further comprising a SIP container 202, also called a SIP engine, that implements SIP Servlet API (SSA) methods and service logic 204 supporting SIP communications for the server 200. Further shown in Figure 2, are two (2) SIP services 206 and 208, or SIP applications, responsible for implementing specific services in the server 200. The SIP services 206 and 208 are connected to the SIP container 202, as shown, via proper communication links or interfaces. Each one of the SIP services 206 and 208 comprises a deployment descriptor file 210 and 212 or respectively, which comprises information about the services' capabilities relative to the option tags and feature tags supported or required by each service. For example, the SIP service 206 comprises the deployment descriptor file 210 that includes the indications 214, 216, and 218 related to two different option tags, which are supported or required by the SIP service 206, as well as one feature tag required by the service 206.

Reference is now made jointly to Figure 2, previously described, and to Figure 4, which is an exemplary flowchart diagram of a method according to the preferred embodiment of the present invention. In this method, first, in action 402, a new SIP service, such as for example the SIP service 206 is installed in the SIP application server 200. In action 404, the SIP engine, or container 202, analyzes the new SIP service 206 in order to determine which end-point capabilities, i.e. which option tags and/or feature tags, are supported or required by the service. Preferably, as shown in Fig. 2, the service 206 also comprises a deployment descriptor file 210 that stores information relative to the end-point capabilities (option tags and feature tags) of the SIP service 206. In such a case, action 404 comprises analyzing by the SIP engine 202 the deployment descriptor file 210 of the service 206 for determining the option tags and feature tags related to the SIP service 206. By analyzing the deployment descriptor file 210, the SIP engine 202 acquires knowledge about the option and feature tags used by the new application service 206, action 406.

During operation, in action 408, the SIP application server 200 may receive a SIP request 220 from an external end-point, wherein the SIP request comprises a Uniform Resource Identifier (URI) 222 that identifies the receiving end-point of the request 220. Upon receipt of the message 220, the SIP container 202 of the application server 200 determines in action 410 whether or not the incoming SIP request is destined to a local end-point, i.e. to one of the local SIP services 206 or 208, by for example comparing the URI 222 with the URI identifying the services 206 and 208 that act as SIP end-points. In the negative, i.e. if the incoming SIP request 220 is not destined to any one of the local services 206 and 208, the SIP request 220 is further relayed from the server 200 to the proper end-point external to the SIP application server 200, action 412. Otherwise, if it is detected in action 410 that the SIP request 220 is destined, for example for the SIP service 206, in action 414 the request is sent to the SIP service 206. In action 416, the SIP service 206 processes the SIP request according to its internal set-up for providing the appropriate service, and then returns to the SIP container 202 a SIP response. In action 418, the SIP container 202 receives the SIP response.

In some other instances, the SIP service 206 may also issue and transmit SIP requests by itself, such as for example when initiating a new SIP session, action 420, without first receiving any SIP message.

In both cases, i.e. following either one of action 418 of issuing a SIP response as a consequence of a receipt of a SIP request, or action 420 of issuing a new SIP request, upon receipt from the SIP service 206 of either the SIP response or the SIP request, the SIP engine 202 may detect in action 422 a need to add end-point capabilities information to the outgoing message, such as one or more option and/or feature tags, based on the knowledge acquired about the supported or required option or feature tags of the SIP service 206, as detected in action 406. Therefore, in action 424, the SIP engine 202 adds the appropriate end-point capability information to the SIP response/request message. For example, action 424 may comprise i) adding the appropriate option tags in one of the SIP message headers'Require', 'Supported', 'Proxy-Require', and 'Unsupported', and/or adding the appropriate feature tags in the 'Contact' header of the SIP message.Finally, in action 426 sends out the modified SIP response/request message 230 with the included end-point capabilities to the appropriate end-point.

Reference is now made to Figure 3.a, which is an exemplary representation of a SIP REGISTER request message 300 comprising a SIP feature tags 302 included in a 'Contact' header 304 according to the preferred embodiment of the present invention. In Figure 3.a the REGISTER request message 300 is used by the sender end-point to indicate its capabilities.

Reference is now further made to Figure 3.b, which is another exemplary representation of a SIP INVITE request message 320 comprising a SIP feature tag 322 included in a 'Contact' header 324 according to the preferred embodiment of the present invention. In Figure 3.b, theINVITE message 320 is used to indicate that is must be routed to a terminal registered with the feature tag mobility = 'mobile'.

Figure 3.c is an exemplary representation of a SIP INVITE request 350 comprising SIP option tags 352 included in a 'Supported' header 354 as well as in a'Required' header 356 according to the preferred embodiment of the present invention.The INVITE message 350 is send by a sender supporting 'privacy' and it wants the request to be routed to a terminating party that supports 'privacy'.

Therefore, with the present invention it becomes possible to transmit SIP end-point capabilities information, such as for example option tags and feature tags, in an optimized manner, where a SIP engine of a SIP server automatically appends this information to outgoing SIP messages generated by a SIP service running on the SIP server based on knowledge by the SIP engine acquired from the SIP service, that acts as an end-point on the SIP server.

Based upon the foregoing, it should now be apparent to those of ordinary skills in the art that the present invention provides an advantageous solution, which simplified and more efficient inclusion of SIP end-point capabilities in an outgoing SIP message. It should be realized upon reference hereto that the innovative teachings contained herein are not necessarily limited thereto and may be implemented advantageously with any applicable radio telecommunications standard that makes also use of SIP, or that supports SIP. Furthermore, variants of the detailed exemplary scenario presented in Figures 2 and 4 are also possible. According to one of these variants of the preferred embodiment of the invention, in action 410 of Figure 4 a further analysis can be performed on the incoming SIP message to determine what option tags or feature tags it includes in its message headers. These tags may be compared to the capabilities supported by the SIP services local to the application server 200, and in case there is a match, i.e. in case the destination local service supports the option tags or feature tags requested by the message, the SIP message is forwarded to the local service of destination, action 414. Action 414 may also be performed as a result of analysis by the SIP engine of mapping rules acquired from the deployment descriptor file of the SIP service, which rules may specify in which conditions an incoming SIP message is to be passed to a given SIP service. Otherwise, if there is no match between in case the destination local service does not support the option tags or feature tags requested by the message, or as stated by the mapping rules, the incoming SIP message can be discarded or forwarded to another end-point, such as for example to another SIP server. It is believed that the operation and construction of the present invention will be apparent from the foregoing description. While the method and system shown and described have been characterized as being preferred, it will be readily apparent that various changes and modifications could be made therein without departing from the scope of the invention as defined by the claims set forth hereinbelow.

Although several preferred embodiments of the method and system of the present invention have been illustrated in the accompanying Drawings and described in the foregoing Detailed Description, it will be understood that the invention is not limited to the embodiments disclosed, but is capable of numerous rearrangements, modifications and substitutions without departing from the invention as set forth and defined by the following claims.

## Claims

1. A method for creating a Session Initiation Protocol (SIP) message, the method comprising the steps of:
a. sending (414) a SIP message from a SIP service (206, 208) running on a SIP application server (200) to a SIP engine (202) of the server;
b. including (424) by the SIP engine (202) in the SIP message information relative to end-point capabilities; and
c. sending (426) the SIP message (230) including the information relative to end-point capabilities from the SIP application server (200), the method further comprising, prior to step a., the steps of:
d. installing (402) the SIP service (206, 208) on the SIP application server (200); and
e. analysing (404) by the SIP engine (202) the SIP service (206, 208) and acquiring knowledge (406) about the information relative to end-point capabilities of the SIP service.

2. The method claimed in claim 1, wherein the information relative to end-point capabilities comprises option tags.

3. The method claimed in claim 1, wherein the information relative to end-point capabilities comprises feature tags.

4. The method claimed in claim 1, the method further comprising before step b. the step of:
d'. detecting (422) a need to add the end-point capabilities to the SIP message;
wherein step b. is performed responsive to step d.

5. The method claimed in claim 1, wherein step e. comprises analysing by the SIP engine a deployment descriptor file (210, 212) associated with the SIP service (206, 208) and acquiring knowledge about the information relative to end-point capabilities of the SIP service from the deployment descriptor file.

6. The method claimed in claim 1, further comprising the steps of:
f. receiving (408) an incoming SIP request message at the SIP application server (200), the incoming SIP request message being destined to an end-point associated to the SIP service;
g. detecting (410) that the incoming SIP message is destined to the end-point associated to the SIP service;
h. responsive to step g., relaying (414) the incoming SIP request message from the SIP engine to the SIP service; and
i. upon receipt of the incoming SIP request message by the SIP service, processing (416) the message;
wherein step a. is performed as a result of step i.

7. The method claimed in claim 1, wherein the SIP message including the information relative to end-point capabilities is a SIP request message.

8. The method claimed in claim 1, wherein the SIP message including the information relative to end-point capabilities is a SIP response message.

9. A Session Initiation Protocol (SIP) application server (200) comprising:
a SIP engine (202) supporting SIP communications; and
a SIP service (206, 208) running on the SIP server;
the SIP application server (200) **comprising** a SIP message being sent from the SIP service (206, 208) to the SIP engine (202), which includes in the SIP message information relative to end-point capabilities and further sends the SIP message including the information relative to end-point capabilities from the SIP application server (200) wherein the SIP service is installed in the SIP application server, and the SIP engine analyses the SIP service for acquiring knowledge about the information relative to end-point capabilities of the SIP service,

10. The SIP application server claimed in claim 9, wherein the information relative to end-point capabilities comprises option tags.

11. The SIP application server claimed in claim 9, wherein the information relative to end-point capabilities comprises feature tags.

12. The SIP application server (200) claimed in claim 9, wherein the SIP engine (202) first detects a need to add the end-point capabilities to the SIP message, and then includes the information relative to end-point capabilities in the SIP message.

13. The SIP application server (200) claimed in claim 9, wherein:
the SIP service (206, 208) is associated with a deployment descriptor file (210, 212) that includes information about the SIP service end-point capabilities, wherein when the SIP engine (202) analyses the SIP service (206, 208), the SIP engine analyses the deployment descriptor file (210, 212) associated with the SIP service (206, 208) and acquires knowledge about the information relative to end-point capabilities of the SIP service (206, 208) from the deployment descriptor file (210, 212).

14. The SIP application server (200) claimed in claim 9, wherein an incoming SIP message (220) is received at the SIP application server (200), the incoming SIP message (220) being destined to an end-point associated to the SIP service (206, 208), the SIP engine (202) detects that the incoming SIP message is destined to the end-point associated to the SIP service (206, 208) and relays the incoming SIP message to the SIP service, which processes the message,
wherein the SIP message is sent from the SIP service (206, 208) to the SIP engine (202) as a result of the message processing.

15. The SIP application server (200) claimed in claim 9, wherein the SIP message includes the information relative to end-point capabilities is a SIP request message.

16. The SIP application server (200) claimed in claim 9, wherein the SIP message including the information relative to end-point capabilities is a SIP response message.

## Patentansprüche

1. Verfahren zur Erstellung einer Sitzungseinleitungsprotokoll (SIP)-Nachricht, wobei das Verfahren die folgenden Schritte umfasst:
a. Senden (414) einer SIP-Nachricht von einem SIP-Dienst (206, 208), der auf einem SIP-Anwendungsserver (200) läuft, an eine SIP-Maschine (202) des Servers;
b. Aufnehmen (424) durch die SIP-Maschine (202) in die SIP-Nachricht von Informationen in Bezug auf Endpunktfähigkeiten; und
c. Senden (426) der SIP-Nachricht (230), die die Informationen in Bezug auf Endpunktfähigkeiten enthält, vom SIP-Anwendungsserver (200), wobei das Verfahren vor Schritt a. ferner die folgenden Schritte umfasst:
d. Installieren (402) des SIP-Dienstes (206, 208) auf dem SIP-Anwendungsserver (200); und
e. Analysieren (404) durch die SIP-Maschine (202) des SIP-Dienstes (206, 208) und Erwerben von Kenntnissen (406) über die Informationen in Bezug auf Endpunktfähigkeiten des SIP-Dienstes.

2. Verfahren nach Anspruch 1, wobei die Informationen in Bezug auf Endpunktfähigkeiten optionstags umfassen.

3. Verfahren nach Anspruch 1, wobei die Informationen in Bezug auf Endpunktfähigkeiten Merkmalstags umfassen.

4. Verfahren nach Anspruch 1, wobei das Verfahren vor Schritt b. ferner den folgenden Schritt umfasst:
d', Erkennen (422) einer Notwendigkeit des Hinzufügens der Endpunktfähigkeiten zur SIP-Nachricht;
wobei Schritt b. als Reaktion auf Schritt d. ausgeführt wird.

5. Verfahren nach Anspruch 1, wobei Schritt e. ein Analysieren durch die SIP-Maschine einer Einsatzbeschreibungsdatei (210, 212), die mit dem SIP-Dienst (206, 208) assoziiert ist, und ein Erwerben von Kenntnisse über die Informationen in Bezug auf Endpunktfähigkeiten des SIP-Dienstes aus der Einsatzbeschreibungsdatei umfasst.

6. Verfahren nach Anspruch 1, ferner umfassend die folgenden Schritte:
f. Empfangen (408) einer eingehenden SIP-Anforderungsnachricht am SIP-Anwendungsserver (200), wobei die eingehende SIP-Anforderungsnachricht für einen Endpunkt bestimmt ist, der mit dem SIP-Dienst assoziiert ist;
g. Erkennen (410), dass die eingehende SIP-Nachricht für den Endpunkt bestimmt ist, der mit dem SIP-Dienst assoziiert ist;
h. Weiterleiten (414) als Reaktion auf Schritt g. der eingehenden SIP-Anforderungsnachricht von der SIP-Maschine zum SIP-Dienst; und
i. Verarbeiten (416) der Nachricht bei Empfang der eingehenden SIP-Anforderungsnachricht durch den SIP-Dienst;
wobei Schritte a. als Ergebnis von Schritt i. ausgeführt wird.

7. Verfahren nach Anspruch 1, wobei die SIP-Nachricht, die die Informationen in Bezug auf Endpunktfähigkeiten enthält, eine SIP-Anforderungsnachricht ist.

8. Verfahren nach Anspruch 1, wobei die SIP-Nachricht, die die Informationen in Bezug auf Endpunktfähigkeiten enthält, eine SIP-Antwortnachricht ist,

9. Sitzungseinleitungsprotokoll (SIP)-Anwendungsserver (200), umfassend:
eine SIP-Maschine (202), die SIP-Kommunikationen unterstützt; und
einen SIP-Dienst (206, 208), der auf dem SIP-Server läuft;
wobei der SIP-Anwendungsserver (200) umfasst, dass eine SIP-Nachricht vom SIP-Dienst (206, 208) an die SIP-Maschine (202) gesendet wird, welche in die SIP-Nachricht Informationen in Bezug auf Endpunktfähigkeiten aufnimmt und die SIP-Nachricht, die die Informationen in Bezug auf Endpunktfähigkeiten enthält, vom SIP-Anwendungsserver (200) weitersendet,
wobei der SIP-Dienst im SIP-Anwendungsserver installiert ist, und die SIP-Maschine den SIP-Dienst zum Erwerben von Kenntnissen über Informationen in Bezug auf Endpunktfähigkeiten des SIP-Dienstes analysiert.

10. SIP-Anwendungsserver nach Anspruch 9, wobei die Informationen in Bezug auf Endpunktfähigkeiten Optionstags umfassen.

11. SIP-Anwendungsserver nach Anspruch 9, wobei die Informationen in Bezug auf Endpunktfähigkeiten Merkmalstags umfassen.

12. SIP-Anwendungsserver (200) nach Anspruch 9, wobei die SIP-Maschine (202) zuerst eine Notwendigkeit des Hinzufügens der Eridpunktfähigkeiten zur SIP-Nachricht erkennt und dann die Informationen in Bezug auf Endpunktfähigkeiten in die SIP-Nachricht aufnimmt.

13. SIP-Anwendungsserver (200) nach Anspruch 9, wobei:
der SIP-Dienst (206, 208) mit einer Einsatzbeschreibungsdatei (210, 212) assoziiert ist, die Informationen über die SIP-Dienst-Endpunktfähigkeiten enthält, wobei, wenn die SIP-Maschine (202) den SIP-Dienst (206, 208) analysiert, die SIP-Maschine die Einsatzbeschreibungsdatei (210, 212), die mit dem SIP-Dienst (206, 208) assoziiert ist, analysiert und Kenntnisse über die Informationen in Bezug auf Endpunktfähigkeiten des SIP-Dienstes (206, 208) aus der Einsatzbeschreibungsdatei (210, 212) erwirbt.

14. SIP-Anwendungsserver (200) nach Anspruch 9, wobei eine eingehende SIP-Nachricht (220) am SIP-Anwendungsserver (200) empfangen wird, die eingehende SIP-Nachricht (220) für einen Endpunkt bestimmt ist, der mit dem SIP-Dienst (206, 208) assoziiert ist, die SP-Maschine (202) erkennt, dass die eingehende SIP-Nachricht für den Endpunkt bestimmt ist, der mit dem SIP-Dienst (206, 208) assoziiert ist, und die eingehende SIP-Nachricht zum SIP-Dienst weiterleitet, welcher die Nachricht verarbeitet, wobei die SIP-Nachricht vom SIP-Dienst (206, 208) als Ergebnis der Nachrichtenverarbeitung an die SIP-Maschine (202) gesendet wird.

15. SIP-Anwendungsserver (200) nach Anspruch 9, wobei die SIP-Nachricht, die die Informationen in Bezug auf Endpunktfähigkeiten enthält, eine SIP-Anforderungsnachricht ist.

16. SIP-Anwendungsserver (200) nach Anspruch 9, wobei die SIP-Nachricht, die die Informationen in Bezug auf Endpunktfähigkeiten enthält, eine SIP-Antwortnachricht ist.

## Revendications

1. Une méthode pour créer un message de Protocole d'Initiation de Session (PIS), la méthode comprenant les étapes de:
a. envoyer (414) un message PIS d'un service PIS (206, 208) exécutant sur un serveur d'application PIS (200), vers un moteur PIS (202) du serveur;
b. inclure (424) par le moteur PIS (202) dans le message PIS de l'information relative à des capacités de point limite; et
c. envoyer (426) le message PIS (230) incluant l'information relative aux capacités de point limite du serveur d'application PIS (200), la méthode comprenant de plus, avant l'étape a., les étapes de:
d. installer (402) le service PIS (206, 208) dans le serveur d'application PIS (200); et
e. analyser (404) par le moteur PIS (202) le service PIS (206, 208) et acquérir une connaissance (406) sur l'information relative aux capacités de point limite du service PIS.

2. La méthode selon la revendication 1, dans laquelle l'information relative aux capacités de point limite comprend des étiquettes d'option.

3. La méthode selon la revendication 1, dans laquelle l'information relative aux capacités de point limite comprend des étiquettes de caractéristique.

4. La méthode selon la revendication 1, la méthode comprenant de plus, avant l'étape b., l'étape de:
d' détecter (422) un besoin d'ajouter les capacités de point limite au message PIS; dans laquelle l'étape b. est exécutée en réponse à l'étape d.

5. La méthode selon la revendication 1, dans laquelle l'étape e. comprend analyser par le moteur PIS, un fichier de description de déploiement (210, 212) associé avec le service PIS (206, 208) et acquérir connaissance sur l'information relative aux capacités de point limite du service PIS à partir du fichier de description de déploiement.

6. La méthode selon la revendication 1, comprenant de plus les étapes de:
f. recevoir (408) un message de requête PIS entrant au serveur d'application PIS (200), le message de requête PIS entrant étant destiné à un point limite associé au service PIS;
g. détecter (410) que le message PIS entrant est destiné au point limite associé au service PIS;
h. en réponse à l'étape g., retransmettre (414) le message de requête PIS entrant, du moteur PIS au service PIS; et
i. sur réception du message de requête PIS entrant par le service PIS, traiter (416) le message;
dans laquelle l'étape a. est exécutée en tant qu'un résultat de l'étape i.

7. La méthode selon la revendication 1, dans laquelle le message PIS incluant l'information relative aux capacités de point limite est un message de requête PIS.

8. La méthode selon la revendication 1, dans laquelle le message PIS incluant l'information relative aux capacités de point limite est un message de réponse PIS.

9. Un serveur d'application (200) de Protocole d'Initiation de Session (PIS) comprenant:
un moteur PIS (202) supportant des communications PIS; et
un service PIS (206, 208) exécutant sur le serveur PIS;
le serveur d'application PIS (200) comprenant un message PIS étant envoyé du service PIS (206, 208) au moteur PIS (202), qui inclut dans le message PIS de l'information relative à des capacités de point limite et envoie de plus le message PIS incluant l'information relative aux capacités de point limite du serveur d'application PIS (200) dans lequel le service PIS est installé dans le serveur d'application PIS, et le moteur PIS analyse le service PIS pour acquérir une connaissance sur l'information relative aux capacités de point limite du service PIS.

10. Le serveur d'application PIS selon la revendication 9, dans lequel l'information relative aux capacités de point limite comprend des étiquettes d'option.

11. Le serveur d'application PIS selon la revendication 9, dans lequel l'information relative aux capacités de point limite comprend des étiquettes de caractéristique.

12. Le serveur d'application PIS (200) selon la revendication 9, dans lequel le moteur PIS (202) détecte premièrement un besoin d'ajouter les capacités de point limite au message PIS, et ensuite inclut l'information relative aux capacités de point limite dans le message PIS.

13. Le serveur d'application PIS (200) selon la revendication 9, dans lequel:
le service PIS (206, 208) est associé à un fichier de description de déploiement (210, 212) qui inclut de l'information sur les capacités de point limite du service PIS, dans lequel lorsque le moteur PIS (202) analyse le service PIS (206, 208), le moteur PIS analyse le fichier de description de déploiement (210, 212) associé avec le service PIS (206, 208) et acquiert connaissance sur l'information relative aux capacités de point limite du service (206, 208) PIS à partir du fichier de description de déploiement (210, 212),

14. Le serveur d'application PIS (200) selon la revendication 9, dans lequel un message PIS entrant (220) est reçu au serveur d'application PIS (200), le message PIS entrant (220) étant destiné à un point limite associé au service PIS (206, 208), le moteur PIS (202) détecte que le message PIS entrant est destiné au point limite associé au service PIS (206, 208) et retransmet le message PIS entrant au service PIS, qui traite le message, dans lequel le message PIS est envoyé du service PIS (206, 208) au moteur PIS (202) en tant que résultat du traitement de message.

15. Le serveur d'application PIS (200) selon la revendication 9, dans lequel le message PIS incluant l'information relative aux capacités de point limite est un message de requête PIS.

16. Le serveur d'application PIS (200) selon la revendication 9, dans lequel le message PIS incluant l'information relative aux capacités de point limite est un message de réponse PIS.
